# EUROPEAN PATENT APPLICATION

(11) **EP 1 838 028 A2**
(43) Date of publication of application: **26.09.2007**
(21) Application number: 07005934.0
(22) Date of filing: 22.03.2007
(51) Int. Cl.: H04L 1/18

(54) **Method and apparatus for handling retransmissions in a wireless communications system**

(30) Priority: 24.03.2006 US 743727 P
(71) Applicant: Innovative Sonic Limited, Tortola (VG)
(72) Inventor: Jiang, Sam Shiaw-Shiang, Taipei City (TW)
(74) Representative: Weber, Joachim

(57) **Abstract**

A method for handling retransmissions used in a transmitter of a wireless communications system includes initiating a Hybrid Automatic Repeat Request process (302), transmitting a packet with a first sequence number (304), and transmitting the packet with a second sequence number and marking the packet as a new packet when a transmission number of the packet with the first sequence number reaches a configured maximum number of transmissions (306).

## Description

This application claims the benefit of U.S. Provisional Application No. 60/743,727, filed on March 24, 2006 and entitled "Method and Apparatus for Handling Maximum Number of Transmissions in HARQ", the contents of which are incorporated herein by reference.

The present invention relates to a method for handling retransmissions in a wireless communications systems and related communications device according to the pre-characterizing clauses of claims 1 and 8.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting third generation mobile telecommunication technology, the prior art provides High Speed Downlink Package Access (HSDPA) and High Speed Uplink Package Access (HSUPA), which are used to increase bandwidth utility rate and package data processing efficiency to improve uplink/downlink transmission rate.

In the prior art, HSDPA and HSUPA adopt Hybrid Automatic Repeat Request (HARQ) technology to enhance retransmission rate and reduce transmission delay. HARQ is a technology combining Feed-forward Error Correction (FEC) and ARQ methods, triggers retransmission according to positive/negative acknowledgement signals (ACK/NACK) transmitted from a receiving end, and stores useful information of the last failure transmission for later use. In order to minimize the number of retransmission requests, HARQ uses one of two Soft-Combining methods to ensure that messages can be successfully decoded, which are Chase Combining (CC) and Incremental Redundancy (IR). CC transmits a packet the same as the erroneous packet, and the decoder combines all the received packets before performing decoding. IR increases redundancy to help recovering transmission errors, which sequentially transmits packets having parts of the erroneous packet, and the decoder combines the packets.

Using HARQ, a transmitter can rapidly retransmit erroneous data packet according to acknowledgement signals provided by a receiver. Therefore, when the number of retransmissions is great enough, the receiver can successfully receive packets transmitted from the transmitter unless the receiver is out of a transmission range of the transmitter. However, in order to avoid radio resource waste caused by too many retransmissions, the prior art can set a maximum number of retransmissions. For example, according to Medium Access Control (MAC) protocol specification, "3GPP TS 25.321 V6.7.0" defined by the 3rd Generation Partnership Project (3GPP), an HARQ profile comprises a maximum number of transmissions. After the maximum number of transmissions of a packet, if the packet is not successfully received, the transmitter discards the packet and flushes the buffer. The retransmission of the abandoned packet relies on upper layer or outer ARQ, so that extra delay is induced and transmission efficiency is decreased.

The present invention relates to a method and apparatus for handling retransmissions in a wireless communications system, and more particularly to a method and related apparatus for increasing transmission efficiency and throughput of a Hybrid Automatic Repeat Request process.

This in mind, the present invention aims at providing a method for handling retransmissions in a wireless communications system and related communications device that increases transmission efficiency and throughput of a Hybrid Automatic Repeat Request process.

This is achieved by a method for handling retransmissions used in a transmitter of a wireless communications system and related communications device according to claims 1 and 8. The dependent claims pertain to corresponding further developments and improvements.

As will be seen more clearly from the detailed description following below, the claimed method for handling retransmissions used in a transmitter of a wireless communications system includes initiating a Hybrid Automatic Repeat Request process, transmitting a packet with a first sequence number, and transmitting the packet with a second sequence number and marking the packet as a new packet when a transmission number of the packet with the first sequence number reaches a configured maximum number of transmissions.

In the following, the invention is further illustrated by way of example, taking reference to the accompanying drawings. Thereof
Fig. 1 is a function block diagram of a wireless communications device.
Fig. 2 is a diagram of program code of Fig. 1.
Fig. 3 is a flowchart of a process according to the present invention.

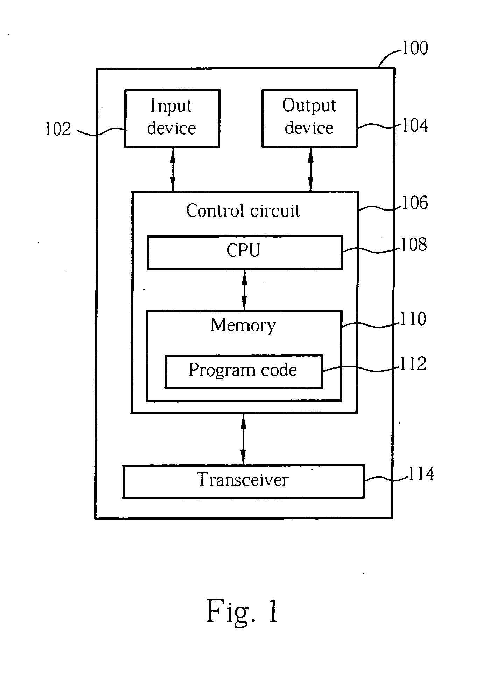

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

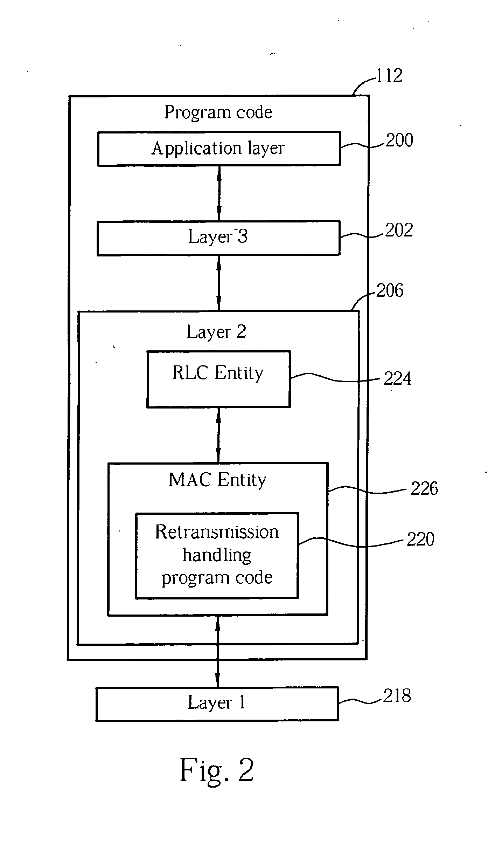

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control (RLC) entity 224 and a media access control (MAC) entity 226. A primary function of the RLC entity 224 is providing different transmission quality processing, performing segmentation, reassembly, concatenation, padding, retransmission, ciphering, sequence check, and duplication detection on transmitted data or control instructions based on different transmission quality requirements. The MAC entity 226 can match packets received from different logic channels of the RLC entity 224 to common, shared, or dedicated transport channels according to radio resource allocation commands of the Layer 3 (RRC layer) 202, for performing channel mapping, multiplexing, transport format selection, or random access control.

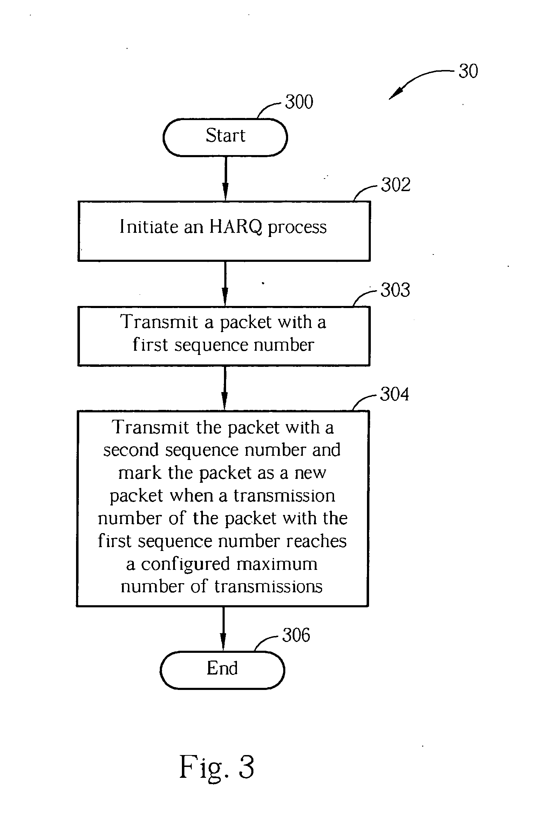

In some applications, such as when realizing high-speed uplink packet access (HSUPA) functions, the MAC entity 226 can execute an HARQ process, and retransmit packets based on acknowledgement signals outputted from a receiver. In this situation, the present invention provides a retransmission handling program code 220 utilized for timely triggering of packet retransmissions, in order to reduce transmission delay and avoid radio resource waste. Please refer to Fig. 3, which is a flowchart diagram of a process 30 according to the present invention. The process 30 is utilized in a transmitter of the wireless communication system for handling retransmissions, and comprises the following steps:

| | |
|---|---|
| Step 300: | Start. |
| Step 302: | Initiate an HARQ process. |
| Step 303: | Transmit a packet with a first sequence number. |
| Step 304: | Transmit the packet with a second sequence number and mark the packet as a new packet when a transmission number of the packet with the first sequence number reaches a configured maximum number of transmissions. |
| Step 306: | End. |

According to the process 30, in an HARQ process, when a packet reaches the configured maximum number of transmissions and is not received successfully, the transmitter marks the packet as a new packet and retransmits it to the receiver, so as to flush soft buffer of the receiver. In other words, retransmissions in the present invention do not rely on upper layer or outer ARQ, so that transmission delay is reduced and transmission efficiency can be enhanced. Preferably, the transmitter can count the transmission number of the packet with a counter, and reset the counter when the packet is marked as a new packet. Besides, the (second) sequence number of the retransmitted packet can be equal to or different from the (first) sequence number of the original packet.

Therefore, in the HARQ process, if the counter counting the transmission number of a packet reaches the maximum number of transmissions stored in HARQ Profile and the transmitter does not receive any acknowledgement signal corresponding to the packet, the transmitter will keep the sequence number of the packet or set another sequence number for the packet, mark the packet as a new packet, and retransmit the packet to the receiver. When the receiver receives the packet marked as the new packet, the receiver flushes buffer before soft combination, so as to avoid the potential problems that the buffer may contain data of a different packet erroneously. Therefore, the present invention can retransmit packets without upper layer retransmission or outer ARQ, so as to increase transmission efficiency and throughput of an HARQ process.

In summary, in an HARQ process, when a packet reaches the configured maximum number of transmissions and is not received successfully, the present invention marks the packet as a new packet and retransmits it to the receiver, so that the receiver can flush buffer to avoid the potential problems of buffer corruption. Meanwhile, the present invention can retransmit packets without upper layer retransmission or outer ARQ, so as to increase transmission efficiency and throughput of the HARQ process.

## Claims

1. A method for handling retransmissions used in a transmitter of a wireless communications system comprising:
initiating a Hybrid Automatic Repeat Request, called HARQ hereinafter, process (302); and
transmitting a packet with a first sequence number (304);
**characterized by** transmitting the packet with a second sequence number and marking the packet as a new packet when a transmission number of the packet with the first sequence number reaches a configured maximum number of transmissions (306).

2. The method of claim 1, **characterized in that** the method further comprises counting the transmission number of the packet with a counter.

3. The method of claim 2, **characterized in that** the method further comprises resetting the counter when the transmission number of the packet with the first sequence number reaches the configured maximum number of transmissions and an acknowledgement signal corresponding to the packet with the first sequence number is not received.

4. The method of claim 1, **characterized in that** the configured maximum number of transmissions is stored in an HARQ Profile.

5. The method of claim 1, **characterized in that** the second sequence number is equal to the first sequence number.

6. The method of claim 1, **characterized in that** the second sequence number is different from the first sequence number.

7. The method of claim 1, **characterized in that** the wireless communications system is a high speed uplink packet access system of a third generation mobile communications system.

8. A communications device (100) of a wireless communications system utilized for reducing transmission delay when handling retransmissions comprising:
a control circuit (106) for realizing functions of the communications device (100);
a processor (108) installed inside the control circuit (106), for executing a program code (112) to command the control circuit (106); and
a memory (110) coupled to the processor (108), for storing the program code (112);
wherein the program code (112) comprises:
initiating a Hybrid Automatic Repeat Request, called HARQ hereinafter, process; and
transmitting a packet with a first sequence number;
**characterized by** the program code (112) transmitting the packet with a second sequence number and marking the packet as a new packet when a transmission number of the packet with the first sequence number reaches a configured maximum number of transmissions.

9. The communications device of claim 8, **characterized in that** the program code (112) further comprises counting the transmission number of the packet with a counter.

10. The communications device of claim 9, **characterized in that** the program code (112) further comprises resetting the counter when the transmission number of the packet with the first sequence number reaches the configured maximum number of transmissions and an acknowledgement signal corresponding to the packet with the first sequence number is not received.

11. The communications device of claim 8, **characterized in that** the configured maximum number of transmissions is stored in an HARQ Profile.

12. The communications device of claim 8, **characterized in that** the second sequence number is equal to the first sequence number.

13. The communications device of claim 8, **characterized in that** the second sequence number is different from the first sequence number.

14. The communications device of claim 8, **characterized in that** the wireless communications system is a high speed uplink packet access system of a third generation mobile communications system.
